Europäisches Patentamt

European Patent Office

Office européen des brevets

(11) Publication number: **0 410 942 A1**

# EUROPEAN PATENT APPLICATION

(21) Application number: 90830329.0

(22) Date of filing: 17.07.90

(51) Int. Cl.⁵: **B62D 5/30**, B62D 5/12

(30) Priority: 21.07.89 IT 6762189

(43) Date of publication of application:
30.01.91 Bulletin 91/05

(84) Designated Contracting States:
**DE ES FR GB IT NL SE**

(71) Applicant: IVECO FIAT S.p.A.
Via Puglia 35
I-10156 Torino(IT)

(72) Inventor: Gheddo, Carlo
Via G. Romita 3/b
I-10137 Torino(IT)

(74) Representative: Buzzi, Franco et al
c/o Jacobacci-Casetta & Perani S.p.A. Via
Alfieri, 17 17
I-10121 Torino(IT)

(54) A hydraulic steering system with two pistons and dual calibration, particularly for commercial vehicles.

(57) A hydraulic steering system for commercial vehicles includes two operating pistons (4, 5) arranged in parallel and movable in counterphase to drive a common steering control member (12, 13) by means of two independent hydraulic circuits (18, 19). The two circuits include respective pressure-limit valves (24, 28; 25, 30) with different operating thresholds and automatic selector means (32) are provided for simultaneously enabling the limit valve with the higher operating threshold (28, 30) and shutting off the limit valve with the lower operaring threshold (24, 25) in each of the two circuits (18, 19) in tne event of damage to the other circuit.

# A HYDRAULIC STEERING SYSTEM WITH TWO PISTONS AND DUAL CALIBRATION, PARTICULARLY FOR COMMERCIAL VEHICLES

The present invention relates to a hydraulic steering system particularly for commercial vehicles.

The object of the invention is to provide a simple, compact hydraulic steering system which can operate with very low operating pressures whilst achieving the same performance as hydraulic steering systems which are in current use for the same applications (use in vehicles in which the load on the steering wheel exceeds the EEC provisions) and which can also ensure considerably greater safety in operation.

According to the invention, this object is achieved by means of a hydraulic steering system characterised in that it includes two operating pistons arranged in parallel and movable in counterphase to drive a common steering-control member by means of two independent hydraulic circuits including respective pressure-limit valves with different operating thresholds, and automatic selector means for simultaneously enabling the limit valve with the higher operating threshold and shutting off the limit valve with the lower operating threshold in each of the two circuits in the event of damage to the other circuit.

By virtue of this concept, the following important advantages are obtained over conventional hydraulic steering systems:
- good performance with reduced operating pressures;
- very safe operation since, in the event of damage to one of the two independent circuits, the operation of the hydraulic steering system is ensured by means of the other circuit, the percentage reduction in servo assistance being limited so that the load on the steering wheel does not increase to unacceptable values;
- less wear and less likelihood of the hydraulic pumps of the two circuits breaking down,
- less likelihood of oil leakage;
- the elimination of overloads on the steering linkage during peak operation;
- less likelihood of wear to the output shaft bearings;
- a longitudinally less bulky hydraulic steering system.

In detail, the hydraulic steering system includes:
- a cylinder in which a first piston which defines two first opposed thrust chambers in the cylinder is reciprocably slidable, the piston forming a first rack which is meshed with a toothed output member,
- first valve means for connecting alternatively one or other of the first thrust chambers to a first delivery line connected to a first pressurised hydraulic-fluid supply and to a first exhaust line respectively, the first valve means including a first slide valve movable with the first piston and a first calibrated valve for limiting the delivery pressure,
- a second piston arranged in parallel with the first piston and defining two second opposed thrust chambers in the cylinder, the second piston forming a second rack which is meshed with the opposite side of the toothed output member from the first rack, the second piston being movable in counterphase with the first piston,
- second valve means for connecting alternatively one or other of the second thrust chambers to a second delivery line connected to a second pressurised hydraulic-operating fluid supply and to a second exhaust line respectively, the connections being the reverse of those of the first valve means of the first piston, and the second valve means including a second slide-valve arranged in series with the first slide-valve, and a second calibrated valve for limiting the delivery pressure,
- first and second auxiliary calibrated pressure-limit valves arranged in parallel with the first pressure-limit valve and the second pressure-limit valve respectively and having different calibrations from the latter so as to be opened at a substantially greater threshold pressure, and
- an auxiliary slide distributor valve associated with the first and second auxiliary pressure-limit valves and acted upon, on opposite sides, by the respective pressures of the first and second delivery lines which normally keep it in a central position in which the two auxiliary valves are shut off; a drop in pressure in one of the delivery lines causing the auxiliary distributor valve to move to a position in which the operation of the auxiliary pressure-limit valve associated with the other delivery line is enabled and the respective first or second pressure-limit valve is shut off simultaneously.

The opposite ends of the auxiliary distributor valve are also conveniently acted upon by two resilient loads of equal magnitude.

Normally, the operating threshold of the first and second pressure-limit valves is between 75 and 120 bars and the operating threshold of the auxiliary pressure-limit valves is of the order of 150 + 10 bars. Both the operating thresholds may be varied and adapted to the requirements of the user vehicle.

To advantage, the first and second valve means, the auxiliary valves and the auxiliary distributor valve are integrated in a body fixed to the cylinder of the hydraulic steering system.

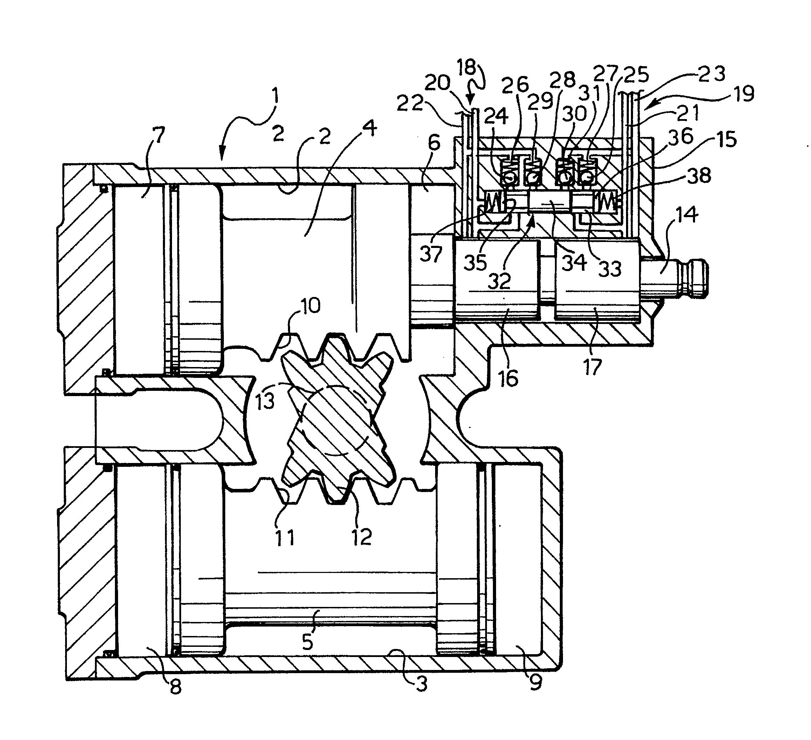

The invention will now be described in detail with reference to the appended drawing, provided purely by way of non-limiting example, which is a schematic axial-sectional view of a hydraulic steering system with two pistons and dual calibration according to the invention.

With reference to the drawing, a body, generally indicated 1, forms two cylinders 2, 3, superposed or arranged side by side, in which two pistons 4, 5 are sealingly slidable. Each piston 4, 5 defines two opposing thrust chambers 6, 7 and 8, 9 in its respective cylinder 2, 3.

The two pistons 4, 5 are formed on opposing sides with respective racks 10, 11 which are meshed with opposite sides of a toothed member 12 fixed for rotation with an output shaft 13 for controlling the steerable wheels of a motor vehicle, in known manner.

An input shaft 14 is mounted coaxially with the piston 4 for rotation in a part 15 integral with one end of the body 2 and projects therefrom in order to be rotated, in a manner known to an expert in the art, by the steering wheel of the motor vehicle. The shaft 14 carries first and second slide valves 16, 17 associated with first and second independent hydraulic operating circuits 18, 19. The two circuits 18 and 19 are operatively associated with the piston 4 and the piston 5 respectively in order selectively to connect one of the chambers 6, 7 and one of the chambers 8, 9 to a pressurised hydraulic-fluid supply and the other of the chambers 7, 6 and 9, 8 to the exhaust or vice versa, according to the sense of rotation of the shaft 14.

For this purpose, each hydraulic circuit 18, 19 includes a delivery duct 20, 21 and an exhaust duct 22, 23 whose communication with the chambers 6, 7 and 8, 9 is controlled by means of the slide valves 16 and 17 respectively. The arrangement is such that, when the delivery duct 20 is connected to the chamber 6 of the piston 4, the delivery duct 21 supplies the chamber 8 associated with the piston 5 and likewise for the chambers 7 and 9. The two pistons 4 and 5 are thus moved in counterphase so as simultaneously to rotate the toothed member 12.

For simplicity, the above-described connections between the ducts 20, 22, 21, 23 and the chambers 6-9, by means of the distributors 16 and 17, are not shown in detail in the drawing since they are within the capabilities of an expert in the art.

The delivery ducts 20 and 21 are conveniently connected to two independent supplies, for example a hydraulic pump operated by the drive shaft of the vehicle and a hydraulic pump driven by the gearbox output shaft.

Two pressure-limit valves 24 and 25 can put the delivery ducts 20 and 21 into bypass communication with their respective exhaust ducts 22 and 23. The valves 24 and 25 are constituted by ball obturators which are acted on by respective springs 26, 27 whose calibration is such as to enable the valves 24 and 25 to open when the pressure in the chambers 6 or 7 and 8, 9 which are in communication with the respective delivery ducts 20 and 21 exceeds a predetermined threshold value, normally between 75 and 120 bars.

Two pressure-limit valves 28, 30 are arranged in parallel with the limit valves 24 and 25 and have a similar configuration. They are constituted by respective ball obturators which are kept closed by respective springs 29, 31 whose calibration is such as to enable the respective obturators to open when the pressure in the corresponding chambers 6 or 7 and 8 or 9 reaches a threshold of the order of 150-160 bars.

The limit valves 24, 25 and 28, 30 are housed in the part 15 of the body 2 and, as can be seen in the drawing, are arranged in a row with the valves 24 and 25 situated at the ends and the auxiliary valves 28 and 30 in between.

An auxiliary distributor valve, indicated 32, is operatively associated with the limit valves 24, 25 and 28, 30 in order to control their communication with the chambers 6 or 7 and 8 or 9 in the manner explained below. The distributor slide 32 is slidable in a chamber 33 in the part 15 and has a central portion 34 and two end portions 35, 36.

The ends of the chamber 33 communicate with the delivery ducts 20 and 21 so that the end portions 35 and 36 of the auxiliary distributor valve 34 are subject to the delivery pressures. Moreover, two centring springs 37, 38 exert equal loads on the end portions 35 and 36.

The hydraulic steering system according to the invention operates as follows.

Under normal operating conditions, a rotation imparted to the shaft 5, by means of the slide-valve distributors 16 and 17, causes one of the chambers 6, 7 to be connected to the delivery duct 20 and the other chamber 7, 6 to be connected to the exhaust duct 22 and causes one of the chambers 8, 9 to be connected to the delivery duct 21 and the other chamber 9, 8 to be connected to the exhaust duct 23. The movement of the pistons 4 and 5 in opposite directions causes the servo-assisted rotation of the shaft 13 to which, as stated, the lever for operating the steering linkage of the vehicle is connected.

Under normal operating conditions, the hydraulic steering system is fully servo-assisted and its calibration is determined by the two pressure-limit valves 24, 25 which have the lower calibrations. In fact, under these conditions, the auxiliary distributor 32 is kept in the central position, shown in the drawings, in which its central portion 34 prevents communication between the delivery ducts 20 and 21 and the auxiliary valves 28 and 30, whilst its end portions 35 and 36 allow communication between the limit valves 24 and 25 and the delivery ducts 20 and 21.

If one of the circuits 18, 19 is damaged, or if there is a drop in pressure in one or other of the delivery ducts 20, 21, the auxiliary distributor valve 32 is moved by the pressure exerted on its end portion 35 or 36 corresponding to the operative circuit 18 or 19, so as simultaneously to enable the corresponding auxiliary limit valve 28 or 30 (as a result of the movement of the intermediate portion 34 away from it) and to shut off the corresponding limit valve 24 or 25 as a result of the movement of the corresponding end portion 35 or 36. Under these conditions, the hydraulic steering system thus comes to be operated by the piston 4 or 5 which is driven by the operative circuit 18 or 19 which operates at a pressure greater than its normal operating pressure by virtue of the higher calibration levels of the auxiliary valves 28 and 30.

In the event of damage to one of the circuits 18 and 19, the percentage reduction in the servo-assistance is thus limited and, at any rate, is such as to prevent an unacceptable increase in the load on the steering wheel.

## Claims

1. A hydraulic steering system for commercial vehicles, characterised in that it includes two operating pistons (4, 5) arranged in parallel and movable in counterphase to drive a common steering-control member (12, 13) by means of two independent hydraulic circuits (18, 19) including respective pressure-limit valves (24, 28; 25, 30) with different operating thresholds, and automatic selector means (32) for simultaneously enabling the limit valve (28, 30) with the higher operating threshold and shutting off the limit valve (24, 25) with the lower operating threshold in each of the two circuits (18, 19) in the event of damage to the other circuit (19, 18).

2. A hydraulic steering system according to Claim 1, characterised in that it includes:
- a cylinder (2) in which a first piston (4) which defines two first opposed thrust chambers (6, 7) in the cylinder (2) is reciprocally slidable, the piston (4) forming a first rack (10) which is meshed with a toothed output member (12),
- first valve means (16, 18) for connecting alternatively one or other of the first thrust chambers (6, 7) to a first delivery line (20) connected to a first pressurised hydraulic fluid supply and to a first exhaust line (22) respectively, the first valve means including a first slide valve (16) movable with the first piston (4) and a first calibrated valve (24) for limiting the delivery pressure,
- a second piston (5) arranged in parallel with the first piston (4) and defining two second opposed thrust chambers (8, 9) in the cylinder (2), the second piston (5) forming a second rack (11) which is meshed with the opposite side of the toothed output member (12) from the first rack (10), the second piston (5) being movable in counterphase with the first piston (4), second valve means (17, 19) for connecting alternatively one or other of the second thrust chambers (8, 9) to a second delivery line (21) connected to a second pressurised hydraulic fluid supply and to a second exhaust line (23) respectively, the connections being the reverse of those of the first valve means (16, 18) of the first piston (4), and the second valve means including a second slide valve (17) arranged in series with the first slide valve (16) and a second calibrated valve (25) for limiting the delivery pressure,
- first and second auxiliary calibrated pressure-limit valves (28, 30) arranged in parallel with the first pressure-limit valve and the second pressure-limit valve (24, 25) respectively and having different calibrations from the latter so as to be opened at a substantially greater threshold pressure, and
- an auxiliary distributor valve (32) associated with the first and second auxiliary pressure-limit valves (28, 30) and acted upon, on opposite sides, by the respective pressures of the first and second delivery lines (20, 21) which normally keep it in a central position in which the two auxiliary valves (28, 30) are shut off; a drop in pressure in one of the delivery lines (20, 21) causing the auxiliary distributor valve (32) to move to a position in which the operation of the auxiliary pressure-limit valve (28, 30) associated with the other delivery line (21, 20) is enabled and the relative first or second pressure-limit valve (24, 25) is shut off simultaneously.

3. A hydraulic steering system according to Claim 2, characterised in that opposite ends of the auxiliary distributor (32) are also acted upon by two resilient centring loads (37, 38) of equal magnitude.

4. A hydraulic steering system according to Claim 2, characterised in that the operating thresholds of the first and second pressure-limit valves (24, 25) are between 75 and 120 bars and the operating thresholds of the auxiliary pressure-limit valves (28, 30) are of the order of 150 + 10 bars.

5. A hydraulic steering system according to Claim 2, characterised in that the first and second valve means (16, 18; 17, 19) are integrated in a body (15) fixed to the cylinder (1).

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | PATENT ABSTRACTS OF JAPAN vol. 11, no. 301 (M-628)(2748) 30 September 1987, & JP-A-62 91369 (HINO MOTORS LTD) 25 April 1987, * the whole document * | 1, 2 | B62D5/30 B62D5/12 |
| A | EP-A-225993 ( ZAHNRADFABRIK FRIEDRICHSHAFEN AKTIENGESELLSCHAFT) * column 6, lines 5 - 15; claims 1-3, 6; figures 1, 5 * | 1, 2 | |
| A | EP-A-67320 (NISSAN MOTOR COMPANY LTD) * claim 1; figure 1 * | 2, 3 | |
| A | US-A-2755625 (ACTON) * claim 5; figure 3 * | 2, 3 | |

| | TECHNICAL FIELDS SEARCHED (Int. Cl.5 ) |
|---|---|
| | B62D |

The present search report has been drawn up for all claims

| Place of search | Date of completion of the search | Examiner |
|---|---|---|
| THE HAGUE | 26 OCTOBER 1990 | MYON G.J-P. |

EPO FORM 1503 03.82 (P0401)